# EUROPEAN PATENT SPECIFICATION

(11) **EP 1 171 819 B1**
(45) Date of publication and mention of the grant of the patent: **25.07.2007**
(21) Application number: 00907167.1
(22) Date of filing: 03.02.2000
(51) Int. Cl.: G06F 9/46

(54) **METHOD AND SYSTEM FOR TRACKING CLIENTS**
VERFAHREN UND SYSTEM ZUR KLIENTENVERFOLGUNG
PROCEDE ET SYSTEME PERMETTANT LE SUIVI DES CLIENTS

(30) Priority: 03.02.1999 US 118668 P; 28.05.1999 US 322852; 28.05.1999 US 322964; 28.05.1999 US 322207; 28.05.1999 US 322459; 28.05.1999 US 322643; 28.05.1999 US 322965; 28.05.1999 US 322962; 28.05.1999 US 322455; 28.05.1999 US 322457
(43) Date of publication of application: 16.01.2002
(73) Proprietor: Gates, William H., III, Medina, WA 98039 (US)
(72) Inventor: HASHA, Richard, Seattle, WA 98102 (US)
(74) Representative: Grünecker, Kinkeldey, Stockmair & Schwanhäusser Anwaltssozietät
(86) International application number: PCT/US2000/002953
(87) International publication number: WO 2000/046673

(56) References cited:
- EP-A- 0 816 968
- WO-A-94/11810
- US-A- 5 522 077

## Description

The disclosure relates generally to object-oriented programming techniques and, more specifically, to a system for automatically tracking client references to a server.

It has been a goal of the software industry to develop standard software components that can be reused and that can be easily combined to form complex systems. It is envisioned that the functionality provided by these software components would be described in much the same way that a data sheet describes a hardware component *(e.g.,* a special-purpose telecommunications chip). Various object models have been defined that provide a standard interconnection mechanism between software components. Under these object models, software components are "objects" in the object-oriented sense, and the software components provide "interfaces" through which their functionality can be accessed. By using interfaces, objects can expose their functionality independently, of the implementation of the functionality. In the C++ programming language, an interface is an abstract class whose virtual functions are all pure. A pure virtual function is one that has no implementation in the class. Thus, an interface defines only the order of the virtual functions within the class and the signatures of the virtual functions, but not their implementations. The following is an example of an interface:

```
  class IShape
  {
         virtual void draw(int x,y)=0;
         virtual void save(char filename)=0;
         virtual void clear(int x,y)=0;
  }
```

This interface, named "IShape," has three virtual functions: draw, save, and clear. The "=0" after the formal parameter list indicates that each virtual function is pure. Concepts of the C++ programming language that support object-oriented programming are described in "The Annotated C++ Reference Manual," by Ellis and Stroustrup, published by Addison-Wesley Publishing Company in 1990, which is hereby incorporated by reference.

Once an interface is defined, programmers can write programs to access the functionality independent of the implementation. Thus, an implementation can be changed or replaced without having to modify the programs that use the interface. For example, the save function of the IShape interface may have an implementation that saves the shape information to a file on a local file system. Another implementation may save the shape information to a file server accessible via the Internet.

To ensure that an implementation provides the proper order and signatures of the functions of an interface, the class that implements the interfaces inherits the interface. The following is an example of a class definition that implements the IShape interface.

```
   class Shape : IShape
   {
           virtual void save(char filename) { ... } ;
           virtual void clear(int x,y){... };
           virtual void draw(int x,y){ ... };
           virtual void internal_save(){...};
           int x;
           int y;
   }
```

The first line of the class definition indicates by the ": IShape" that the Shape class inherits the IShape interface. The ellipses between the braces indicate source code that implements the virtual functions. The Shape class, in addition to providing an implementation of the three virtual functions inherited from the IShape interface, also defines (*i.e.*, introduces) a new virtual function "internal_save," which may be invoked by one of the implementations of the other virtual functions. The Shape class also has defined two integer data members, x and y.

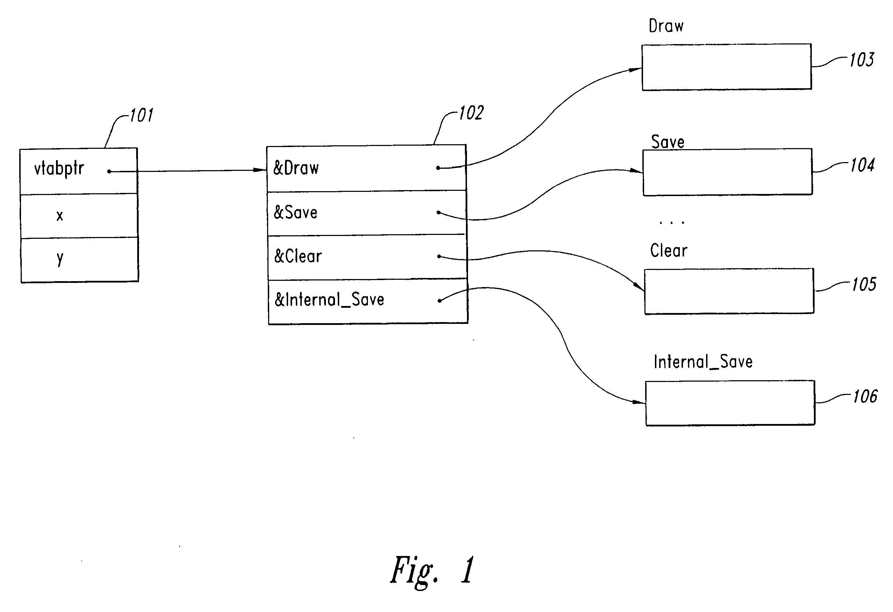

Typical C++ compilers generate virtual function tables to support the invocation of virtual functions. When an object for a class is instantiated, such a C++ compiler generates a data structure that contains the data members of the object and that contains a pointer to a virtual function table. The virtual function table contains the address of each virtual function defined for the class. Figure 1 illustrates a sample object layout for an object of the Shape class. The object data structure 101 contains a pointer to a virtual function table and the data members x and y. The virtual function table 102 contains an entry for each virtual function. Each entry contains the address of the corresponding virtual function. For example, the first entry in the virtual function table contains the address of the draw function 103. The order of the references in the virtual function table is the same as defined in the inherited interface even though the Shape class specifies these three functions in a different order. In particular, the reference to the draw function is first, followed by the references to the save and clear functions.

The inheritance of interfaces allows for references to objects that implement the interfaces to be passed in an implementation independent manner. A routine that uses an implementation may define a formal argument that is a pointer to the IShape interface. The developer of the routine can be unaware that the implementation is actually the Shape class. To pass a reference to an object of the Shape class, a program that invokes the routine would type cast a pointer to the object of the Shape class to a pointer to the IShape interface. So long as the pointer points to a location that contains the address of the virtual function table and the virtual function table contains the entries in the specified order, the invoked routine can correctly access the virtual functions defined by the IShape interface.

One popular object model that specifies a mechanism for interconnecting components is Microsoft's Component Object Model ("COM"). COM is more fully described in "Inside COM" by Dale Rogerson and published by Microsoft Press in 1997. COM specifies that each object is to implement an interface referred to as the IUknown interface. The IUnknown interface provides a query interface function, an add reference function, and a release function. The query interface function is passed the identifier of an interface that the object supports and returns a reference to that interface. The add reference and the release functions are used for reference counting the object. Each object that conforms to COM implements the IUknown interface.

A client object that requests to instantiate a COM object may receive a pointer to the IUknown interface in return. The client may then invoke the query interface function passing the identifier of another interface supported by that COM object. The query interface function returns a pointer to the requested interface. The client can then use the pointer to invoke one of the functions of the requested interface. As mentioned above, each interface of a COM object inherits the IUknown interface. Thus, each of these interfaces provides access to other interfaces and provides reference counting. Whenever a client duplicates a pointer to an interface of a COM object, the client is expected to invoke the add reference function, which increments the reference count to that COM object. Whenever the client no longer needs a pointer to an interface to a COM object, the client is expected to invoke the release function, which decrements the reference count to that COM object and destructs the COM object when the reference count goes to 0.

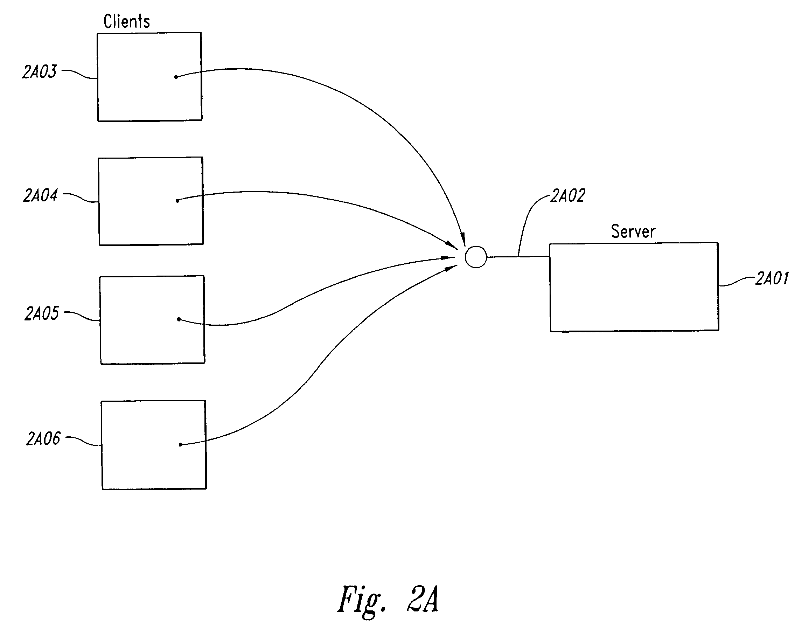

Figure 2A is a block diagram illustrating conventional interconnections between a server object and client objects. In this example, server object 2A01 includes an interface 2A02. Once the server object is instantiated, various client objects 2A03-2A06 may request a pointer an interface of the server object using the query interface function. The server object may have no way of identifying which client object invokes a function of the interface. For example, when client object 2A03 invokes a function, the server object cannot determine whether it is client object 2A03 or client object 2A04 that is invoking the function. Some server objects may be developed so that they can identify the individual client object that is invoking a function. Such server objects may provide each client object with its own identifier. For example, after a client object invokes a query interface function of the server object to retrieve a pointer to an interface, the client object, by convention, may then invoke a function of that interface which returns a unique identifier for that client object. When the client object subsequently invokes a function of the interface, the client object passes its unique identification so that the server object can uniquely identify each client that invokes a function.

Such server objects that can uniquely identify clients have a couple of disadvantages. First, the cost of development of such server objects is increased because of the additional code that is needed to support the unique identifications of client objects. Second, each client object needs to be programmed to receive and provide its unique identification. It would be desirable to have a technique in which existing server objects could be used in such a way so that each client object can be individually identified when it invokes a function. It would be also useful if such a technique would not require any modification to existing server class definitions and client class definitions.

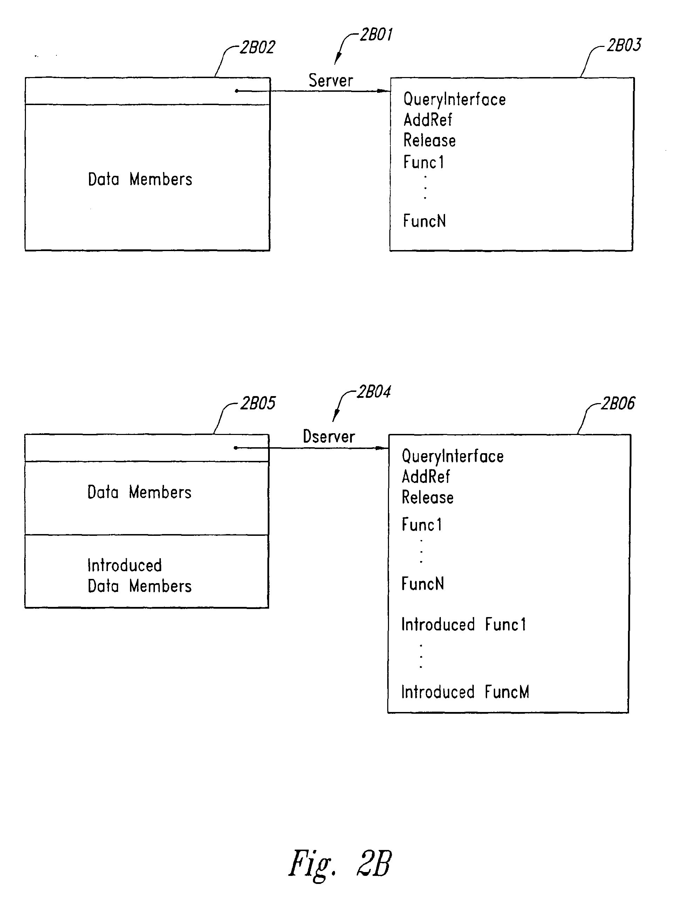

Figure 2B illustrates a typical inheritance of a server class (*i.e*., Server) by a derivation server class *(i.e.,* DServer). In this example, an instance of the Server class 2B01 inherits the IUnknown interface and includes data members 2B02 and function members 2B03. The function members may include the functions of the IUknown interface and various other functions (e.g., func1). The DServer class 2B04 inherits the Server class and includes data members 2B05 and function 2B06. The data members include the inherited data members from the Server class and other data members that may be introduced in the DServer class. The functions include the inherited functions from the Server class and other functions that may be introduced in the DServer class. The DServer class provides implementations for each in introduced functions and may provide overriding implementations for the inherited functions.

WO 94/11810 describes a computer method and system for passing a pointer to an interface from a server process to a client process. In a preferred embodiment the server process instantiates an object that has multiple interfaces. The server process identifies an interface to pass to the client process and creates a stub object for receiving a request to invoke a function member of the interface and for invoking the requested function member upon receiving the request. The server process then sends an identifier of the stub to the client process. When the client process receives the identifier of the stub, it instantiates a proxy object for receiving requests to invoke a function member of the interface and for sending the request to the identified stub. The client process can then invoke the function members of the interface by invoking function members of the proxy object. The proxy object sends a request to the identified stub. The identified stub then invokes the corresponding function member of the interface.

It is the object of the present invention to provide for a method and system for tracking access to a server object by a client on a client-by-client basis, the server object providing references to clients through a query function.

This object is solved by the subject matter of the independent claims. Preferred embodiments are the subject matter of the dependent claims.

According to the present invention, a method and system for tracking access by clients to a server object of a server class is provided. In one embodiment, the client tracking system provides a derived client tracking server class that includes an overriding implementation of a query function of the server class. The overriding implementation instantiates a phantom server object and returns a pointer to the instantiated phantom server object. The phantom server object has functions that correspond to and override the functions of the server class. These overriding functions performed custom processing on a client-by-client basis and forward their invocation to the corresponding functions of the server object. When a client invokes the query function of the client tracking server object, a pointer to a phantom server object is returned. From then on, when that client invokes a function of the phantom server object, custom processing can be performed for that client.

In one embodiment, the client tracking system specifies a phantom manager class for controlling the instantiation, and destruction of the phantom server objects. The phantom manager class may provide a create function, that, when invoked by the query function of the client tracking server object, instantiates a phantom server object and returns a pointer to the phantom server object. The phantom manager class may also provide a phantom going away function that, when invoked by a destructor of a phantom server object, performs custom processing upon destruction of a phantom server object. A developer who wants to track client accesses to a server class that is already defined may specify a derivation of the server class, referred to as an "client tracking server class." The developer may provide an overriding function of the query function as part of the client tracking server class. The developer may also provide an implementation of the create function and the phantom going away function of the phantom manager class that are tailored to the server class. In addition, the developer may provide implementations of the functions of the server class as part of the phantom server object. These implementations of functions of the phantom server object may perform the desired custom processing on a client-by-client basis.
Figure 1 illustrates a sample object layout for an object of the Shape class.
Figure 2A is a block diagram illustrating conventional interconnections between a server object and its client objects.
Figure 2B illustrates a typical inheritance of a server class *(i.e.,* Server) by a derivation server class *(i.e.,* DServer).
Figure 3 is a block diagram illustrating components of the client tracking system in one embodiment.
Figure 4 is a block diagram illustrating components of the client tracking system of one embodiment in more detail.
Figure 5 is a block diagram illustrating an example object layout of the CT server class.
Figure 6 is a block diagram illustrating an example object layout for the phantom manager class.
Figure 7 is a block diagram illustrating the object layout of the phantom server class.
Figure 8 is a diagram illustrating the processing to return to a client a pointer to a phantom server object rather than to the server object itself.
Figure 9 is a diagram illustrating the processing of releasing a pointer to a phantom server object.
Figure 10 is a diagram illustrating the forwarding of a function invocation from a phantom server function to a CT server function.
Figure 11 is a flow diagram of an example implementation of the query interface function of the client tracking server class.
Figure 12 is a flow diagram of an example implementation of the constructor of the phantom manager class.
Figure 13 is a flow diagram of an example implementation of the create function of the phantom manager class.
Figure 14 is a flow diagram of an example implementation of the create instance function of the phantom manager class.
Figure 15 is a flow diagram of an example implementation of the phantom going away function of the phantom manager class.
Figure 16 is a flow diagram of an example implementation of the constructor of the phantom server class.
Figure 17 is a flow diagram of an example implementation of the destructor of the phantom server class.
Figure 18 is a flow diagram of an example implementation of the query interface function of the phantom server class.
Figure 19 is a flow diagram of an example implementation of the add reference function of the phantom server class.
Figure 20 is a flow diagram of an example implementation of the release function of the phantom server class.
Figure 21 is a flow diagram of an example implementation of a function of the phantom server class that is inherited from the interface of the server class.

A method and system for tracking access by clients to a server object is provided. The client tracking system allows access to a server object to be tracked on a client-by-client basis that, in one embodiment, is without modification of the server class definition. The client tracking system provides a client tracking server class that is a derivation of the server class. The client tracking server class includes an implementation of a query interface function that overrides the query interface function of the server class. When the query interface function of the client tracking server class is invoked, it instantiates a phantom server object that provides an implementation of the same interface as provided by the server class *(e.g.,* "IServer"). The query interface function returns a pointer to the phantom server object. When the client invokes a function of the phantom server object, that function can perform custom processing and forward the invocation to the corresponding function of the client tracking server object. The custom processing may include, for example, tracking which client invokes a certain function and then performing an alternate behavior when that same client invokes another function. The custom processing can, however, include any processing that is dependent upon identifying whether a certain client invokes a certain function of the server class.

In one embodiment, the client tracking system provides a phantom server class that includes functions corresponding to and having the same signature as the functions of the server class. The client tracking system also provides a phantom manager class for instantiating phantom server objects, for tracking the phantom server objects, and for returning pointers to the phantom server objects. The phantom manager class may have a create function that when invoked by the client tracking server object instantiates a phantom server object. The phantom manager class may also have a instance going away function that is invoked when a phantom server object is destructed so that custom processing may be performed when a client releases a reference to a phantom server object that causes the reference count to go to 0. The phantom manager class may also have a create instance function that is customized to create an instance of a particular client tracking server object. When the query interface function of the client tracking server object is invoked, it invokes the create function of the phantom manager object, which in turn invokes the create instance function. The create instance function of the phantom manager object is tailored to create an instance of the phantom server object for the specific client tracking server object. The query interface function returns a pointer to this phantom server object. When the pointer to the phantom server object is released and the reference count goes to 0, the destructor of the phantom server object invokes the going away function of the phantom manager object. The phantom going away function performs any custom processing needed when a phantom server object is destructed.

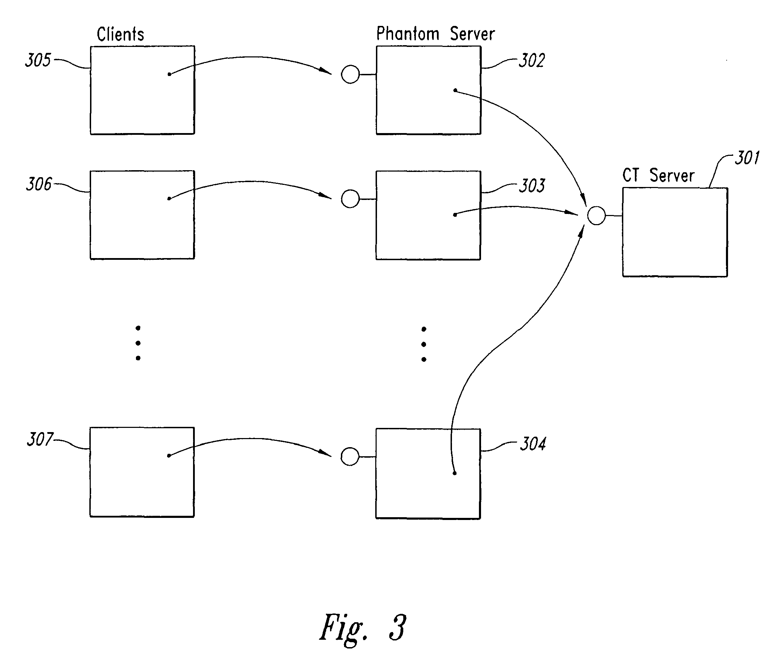

Figure 3 is a block diagram illustrating components of the client tracking system in one embodiment. The components include a client tracking server object 301 ("CT server object") and phantom server objects 302-304, which are accessed by client objects 305-307. The CT server class inherits the Server class and provides the client tracking functionality. The CT server object provides its interface to client objects through the phantom server objects. That is, each client object, when it requests an interface from the CT server object, is provided with a pointer to an interface of a phantom server object, rather than to the interface of the CT server object. Whenever a client object invokes the query interface function of the CT server object or a query interface function of a phantom server object. The function returns a pointer to a phantom server object. A phantom server object effectively inherits an IServer interface so that it includes functions with the same signature and with the same order of the Server class. In general, the functions of the phantom server objects forward their invocations to the CT server object. The functions of a phantom server object can perform custom processing before or after they invoke the corresponding function of the CT server object. In this way, the phantom server functions can perform specialized processing for each client object. If a client object duplicates a pointer, then the client tracking system would consider that both pointers belong the same client object, even though the client object passes the duplicate pointer to another object. The client tracking system may be implemented on a conventional computer system that includes a central processing unit, a memory and input/out devices. In addition, the client objects and server object may be instantiated in the same process or in different processes that may be executing on different computer systems. The components of the client tracking system may be stored on a computer-readable medium such as memory, disk, or CD-ROM and may be transmitted via a computer-readable data transmission medium. Since these data structures may be accessed concurrently by multiple threads of execution, a concurrency management technique is used when accessing these data structures. For example, when accessing the data structures, a thread may lock the data structure and unlock it when access is complete. In the following, the description of the functions that access these data structures omit these well-known concurrency management techniques.

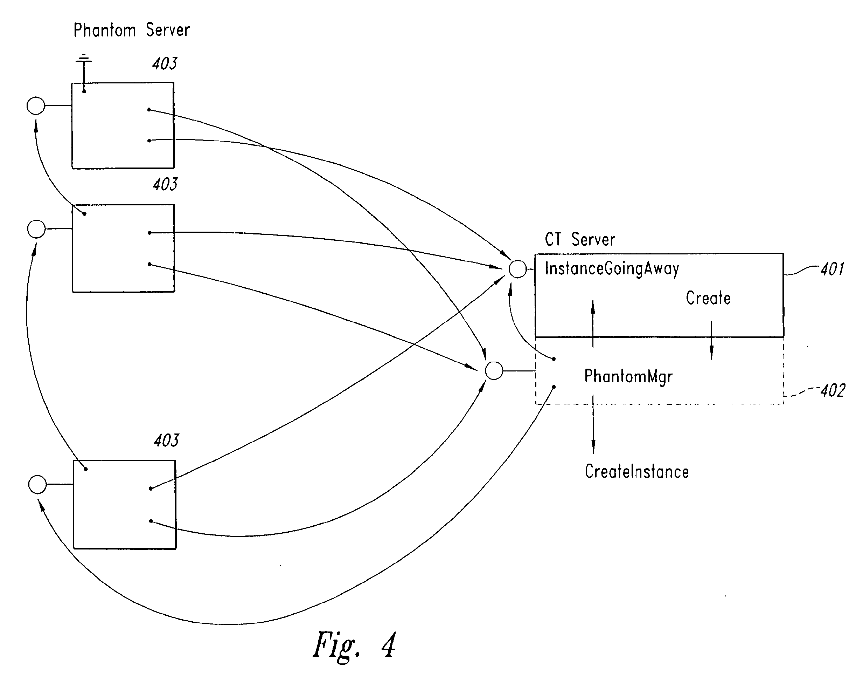

Figure 4 is a block diagram illustrating components of the client tracking system of one embodiment in more detail. The components include a CT server object 401, a phantom manager object 402, and phantom server objects 403. The server class whose access by client objects is to be tracked is a base class of CT server class. The CT server class introduces a data member that is a phantom manager object. In addition, CT server class overrides the query interface function of the server class. The phantom manager class may have a base implementation of its functions and may provide an overriding implementation of a create instance function and an instance going away function. The create instance function creates phantom server object that inherits the interface of the server class. The instance going away function is invoked to perform custom processing when a client object has released all its pointers to the phantom server object. The phantom manager object is responsible for creating the phantom server objects when notified by the CT server object by an invocation of a create function of the phantom manager object. The CT server object would typically invoke the create function during invocation of the query interface function of the CT server object. When a phantom server object detects that its reference count has gone to 0, it invokes a going away function of the phantom manager object. That going away function then invokes the instance going away function to perform custom processing. In this way, the client tracking system can perform processing through the query interface function when a client object is given a pointer and through the invocation of the instance going away function when a client object releases a pointer and the reference count goes to 0.

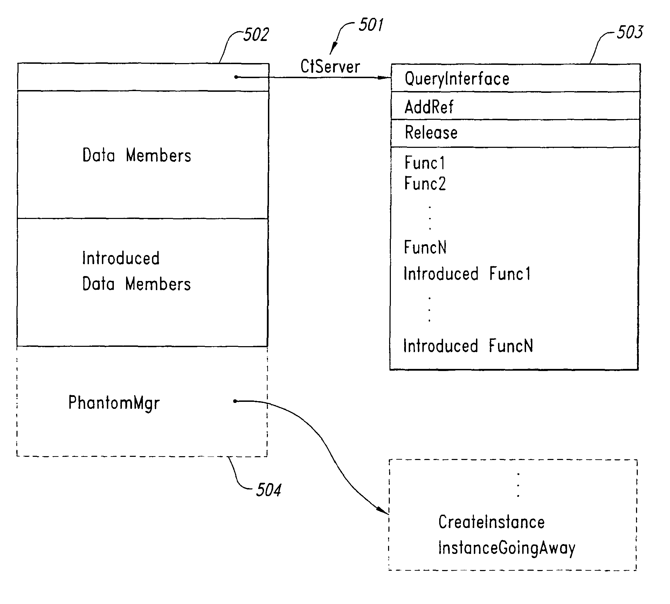

Figure 5 is a block diagram illustrating an example object layout of the CT server class. In this example, the CT server object includes the phantom manager object as a data member. A developer who wants to track accesses to the server object on a client-by-client basis would provide a derivation of the server class that includes a phantom manager object and provides an implementation of the query interface function that overrides the query interface function of the server class. Alternatively, if the query interface function invokes another function by convention, then that other function may be overridden. The implementation of the query interface function invokes the create function of the phantom manager object and returns, as the pointer to the requested interface, the pointer returned by the create function. The developer would provide an overriding implementation of the create instance function that is customized to instantiate phantom server objects of a class that inherits the same interface (e.g., IServer) as the server class. If the developer wants to provide custom processing when a client object releases its pointer and the reference count goes to 0, then the developer may provide an overriding implementation of the instance going away function of the phantom manager class. The developer could also introduce additional data members and functions in the CT server class to support the custom processing.

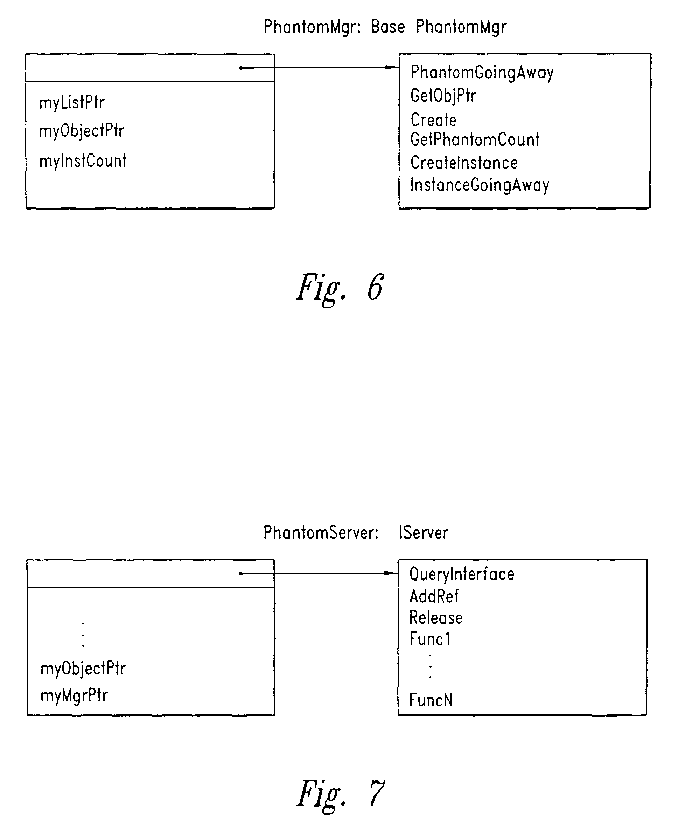

Figure 6 is a block diagram illustrating an example object layout for the phantom manager class. The phantom manager class may inherit a base phantom manager class that includes the data members and functions of Table 1.

| **TABLE 1** | |
|---|---|
| **Member** | **Description** |
| PhantomGoingAway | A function that is invoked by a phantom object to notify the phantom manager that the phantom object is being destructed |
| GetObjectPtr | A function that returns a pointer to the embedding CT object |
| Create | A function that is typically invoked by the query interface function of the CT object to create a phantom object |
| GetPhantomCount | A function that returns the number of phantom objects currently managed by this phantom manager |
| CreateInstance | A function that may be provided by the developer of a phantom server class to instantiate a phantom server object and that is invoked by the create function |
| InstanceGoingAway | A function that may be provided by the developer of the CT server class and that is invoked by the phantom going away function |
| MyListPtr | A pointer to phantom objects of this phantom manager object |
| MyObjectPtr | A pointer to the CT object in which the phantom manager object is embedded |
| MyInstCont | A count indicating of the number of phantom objects |

Figure 7 is a block diagram illustrating the object layout of the phantom server class. The phantom server object inherits the server interface of the server class (e.g., "IServer"). The phantom server object provides an implementation of each function of the server interface. The implementations may forward their invocation to the corresponding function of the CT server object before or after performing custom processing on a per client basis. Table 2 describes data members of the phantom server class.

| **TABLE 2** | |
|---|---|
| **Member** | **Description** |
| MyObjectPtr | Pointer to the corresponding CT object |
| MyMgrPtr | Pointer to the corresponding phantom manager object |

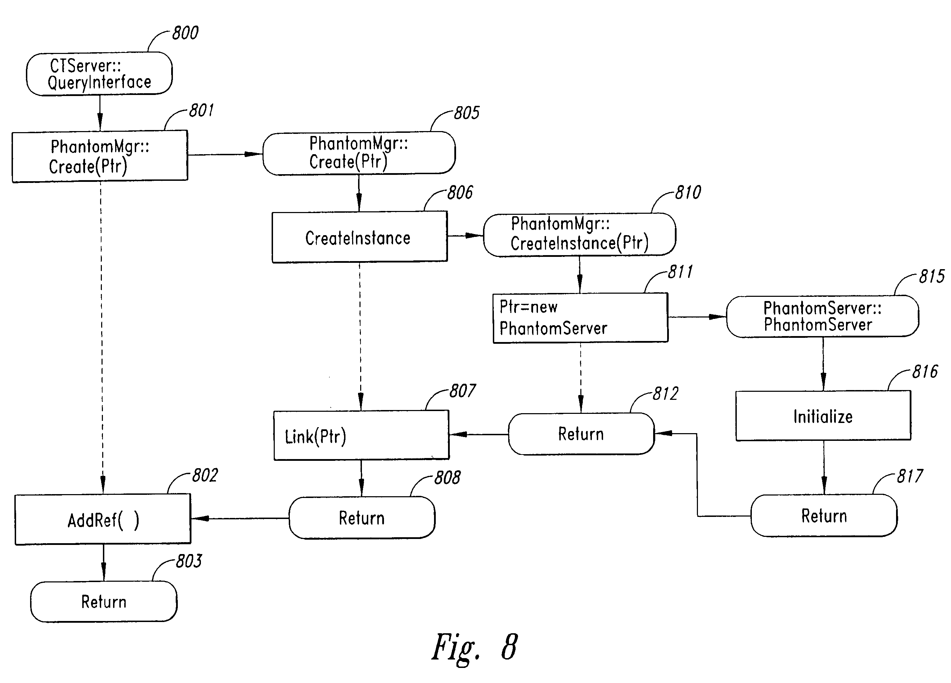

Figure 8 is a diagram illustrating the processing to return to a client object a pointer to a phantom server object rather than to the server object itself. Steps 800-803 illustrate the processing of the query interface function of the CT server class. Steps 805-808 illustrate the processing of the create function of the phantom manager class. Steps 810-812 illustrate the processing of the create instance function of the phantom manager class. Steps 815-817 illustrate the processing of the constructor of the phantom server class. When the query interface function of a CT server object is invoked, the function invokes the create function of the phantom manager object as shown by the arrow from step 801 to step 805. The create function of the phantom manager object invokes the create instance function of that same phantom manager object as shown by the arrow from step 806 to step 810. The create instance function instantiates a phantom server object in step 811 which invokes the constructor for the phantom server object as shown by the arrow from step 811 to step 815. The constructor initializes the phantom server object as appropriate to the custom processing desired in step 816 and then returns to the create instance function as shown by the arrow from step 817 to step 812. The create instance function then returns to the create function as shown by the arrow from step 812 to step 807. The create function links the instantiated phantom server object to the phantom manager object and then returns to the query interface function of the CT server object as shown by the arrow from step 808 to step 802. In step 802, the query interface function invokes the add reference function and then returns with the pointer to the phantom server object.

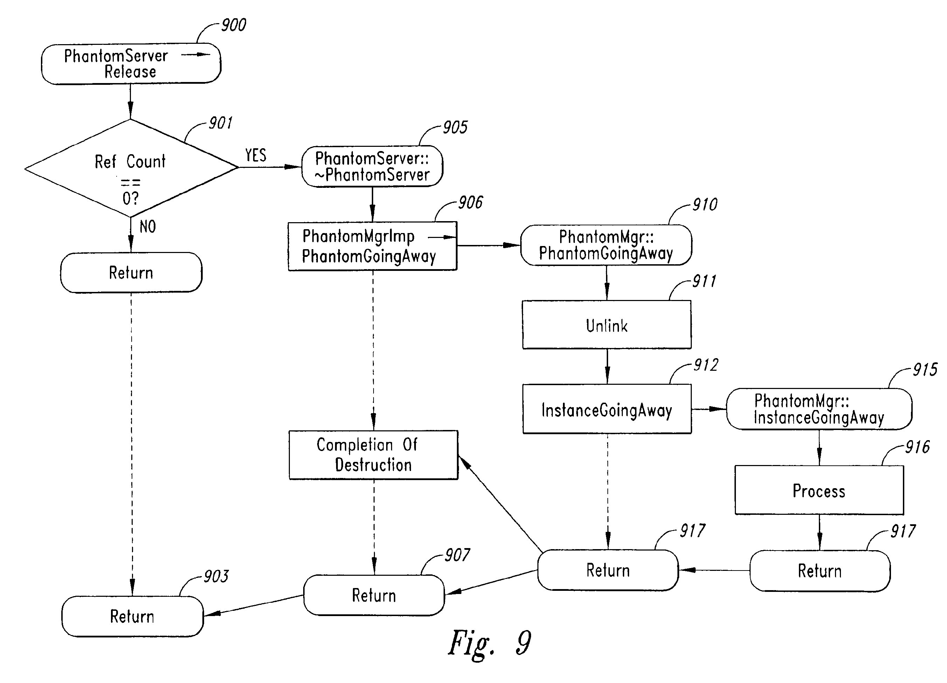

Figure 9 is a diagram illustrating the processing of releasing a pointer to a phantom server object. Steps 900-903 illustrate the processing of the release function of the phantom server object. Steps 905-907 illustrate the processing of the destructor of the phantom server object. Steps 910-913 illustrate the processing of the phantom going away function of the phantom manager object. Steps 915-917 illustrate the processing of the instance going away function of the phantom manager object. When the release function of phantom server object is invoked and the reference count goes to 0, the function invokes the destructor of the phantom server object as shown by the arrow from step 901 to step 905. The destructor of the phantom server object invokes the phantom going away function of the phantom manager object as shown by the arrow from step 906 to step 910. The phantom going away function unlinks the phantom server object from a linked list of phantom server objects in step 911 and invokes the instance going away function in step 912 as shown by the arrow from step 912 to step 915. The instance going away function performs the custom processing of the client tracking system in step 916. The function then returns to the phantom going away function as shown by the arrow from step 917 to step 913. The phantom going away function then returns to the destructor as shown by the arrow from step 913 to step 907. The destructor then returns to the release function of the phantom server object as shown by the arrow from step 907 to step 902. In step 902, the release function completes the destruction, which may include invoking the release function of the CT server object. The release function then returns.

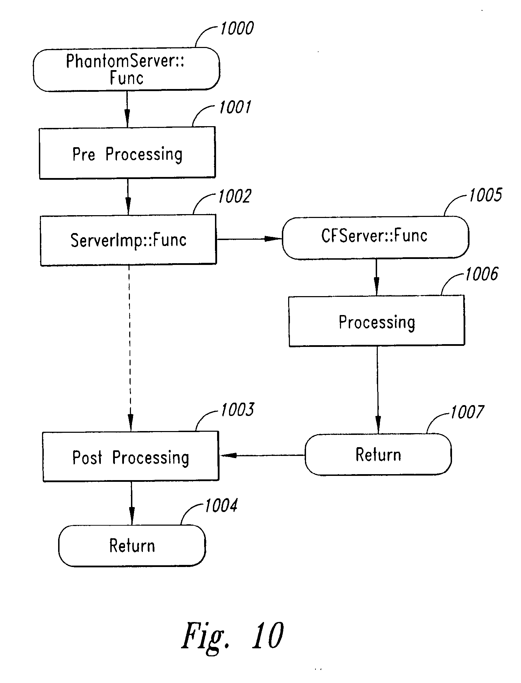

Figure 10 is a diagram illustrating the forwarding of a function invocation from a phantom server function to a CT server function. Such forwarding would be for each function of the server class. Steps 1000-1004 illustrate the processing of a function of a phantom server object. Steps 1005-1007 illustrate the processing of the function of that server object. When the function of the phantom server object is invoked, the function may perform custom preprocessing in step 1001. The function then forwards the invocation to the function of the CT server object as indicated by the arrow from step 1002 to step 1005. The function of the CT server object performs its processing in step 1006 and then returns as shown by the arrow from step 1007 to step 1003. In step 1003, the function performs any custom post processing and then returns.

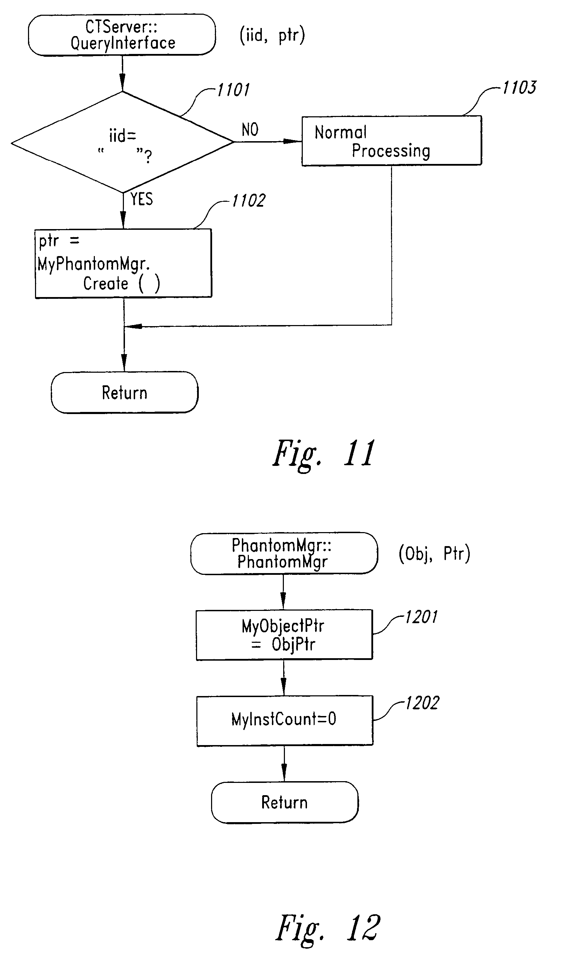

Figures 11-21 are flow diagrams of example implementations of functions of the client tracking server class, the phantom manager class, and the phantom server class. Figure 11 is a flow diagram of the query interface function of the client tracking server class. This function corresponds to the query interface function of the IUknown interface. This function is passed the identification of an interface and returns a pointer to the interface. The implementation of this function in the client tracking server class, which inherits the server class, overrides the implementation of this function in the server class. In step 1101, if the passed interface identifier is for an interface that is to be tracked, then the function continues at step 1102, else the function continues at step 1103. In step 1102, the function invokes the create function of the phantom manager object to create a phantom server object and then returns the pointer to the phantom server object. In step 1103, the function performs the normal processing of the query interface function of the server class and then returns.

Figures 12-15 are flow diagrams of example implementations of functions of the phantom manager class. Figure 12 is a flow diagram of the constructor of the phantom manager class. A phantom manager object is instantiated when the instance of the client tracking server object is instantiated. Alternatively, the instantiation could be deferred until an interface to be tracked is requested by a client. The phantom manager object can be instantiated as a data member of the client tracking server object or can be dynamically instantiated. The constructor is passed a pointer to the client tracking server object. In step 1201, the constructor sets a data member to point to the passed client tracking server object. In step 1202, the constructor initializes a count of the instantiated phantom server objects and then returns.

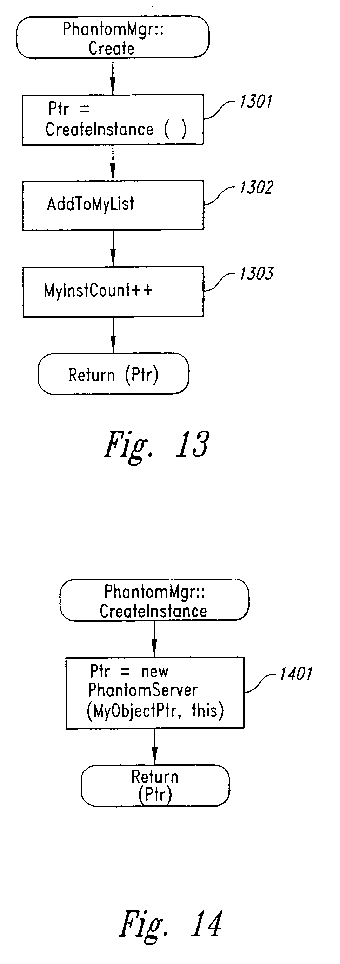

Figure 13 is a flow diagram of the create function of the phantom manager class. This function instantiates a phantom server object, links it to a list for tracking, and returns a pointer to it. In step 1301, the function invokes the create instance function of the phantom manager object and receives a pointer to the instantiated phantom server object. In step 1302, the function adds the phantom server object to a list of phantom server objects. In step 1303, the function increments the count of the instantiated phantom server objects and then returns a pointer to the phantom server object.

Figure 14 is a flow diagram of the create instance function of the phantom manager class. An implementation of this function is provided for each type of phantom server object. In one embodiment, a client tracking server object can have multiple phantom managers, that is one for each type of interface for which a pointer can be returned. The query interface function of the client tracking server object can select the appropriate phantom manager object. In step 1401, the function instantiates a phantom server object passing a pointer to the client tracking server object and a pointer to the phantom manager object. The function then returns a pointer to the instantiated phantom server object.

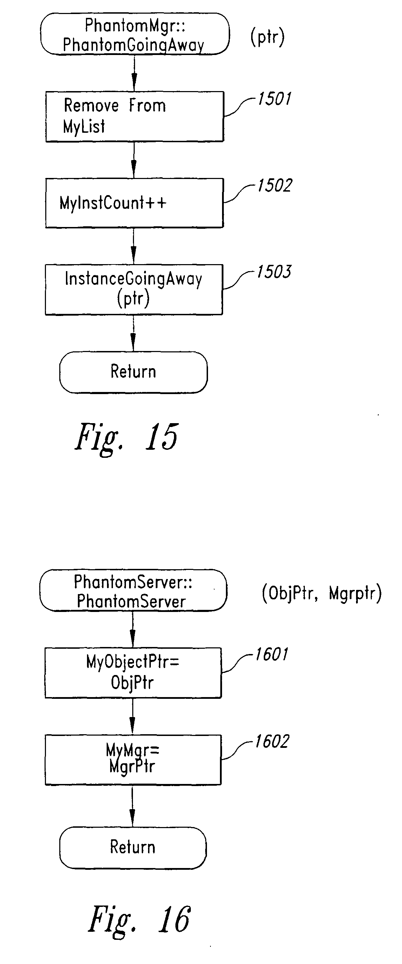

Figure 15 is a flow diagram of the phantom going away function of the phantom manager class. This function is invoked when a phantom server object is being destructed. This removes the phantom server object from the list and invokes the instance going away function. An implementation of the instance going a function is provided by the developer of the client tracking server class to perform any custom processing when a client releases a pointer to the phantom server object and its reference count goes to 0. In step 1501, the function removes the phantom server object from the list. In step 1502, the function decrements the count of phantom server objects. In step 1503, the function invokes the instance going away function and then returns.

Figures 16-21 are flow diagrams of example implementations of functions of the phantom server class. Figure 16 is a flow diagram of the constructor of the phantom server class. This constructor is passed a pointer to the client tracking server object and a pointer to the phantom manager object. In step 1601, the constructor sets a data member to point to the client tracking server object. In step 1602, the constructor sets a data member to point to the phantom manager object. The function then returns.

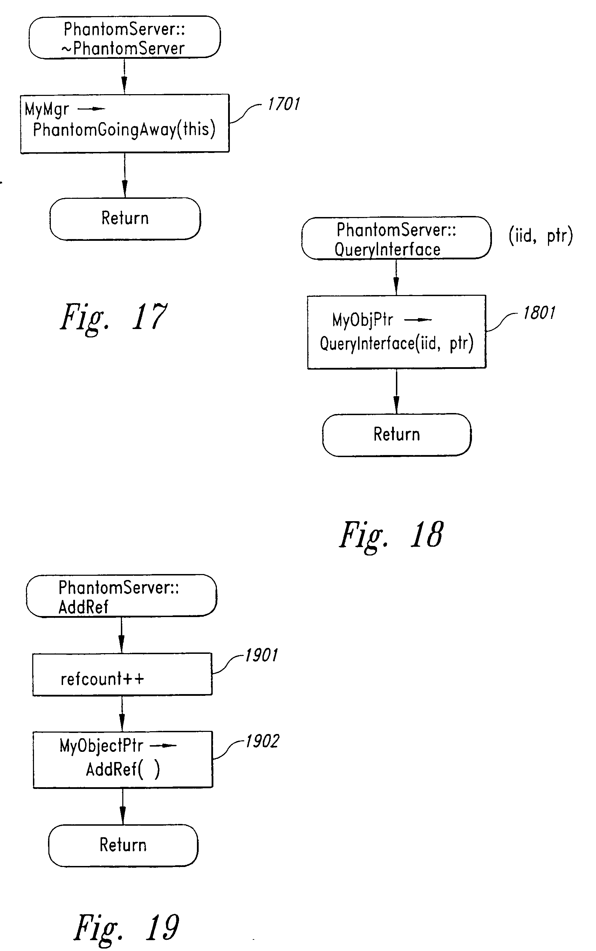

Figure 17 is a flow diagram of the destructor of the phantom server class. In step 1701, the destructor invokes the phantom going away function of the phantom manager object passing a pointer to the phantom server object. The destructor then returns.

Figure 18 is a flow diagram of the query interface function of the phantom server class. In step 1801, the query interface function forwards its invocation to the query interface function of the client tracking server object. The function then returns.

Figure 19 is a flow diagram of the add reference function of the phantom server class. In step 1901, the function increments the reference count of the phantom server object. In step 1902, the function forwards its invocation to the client tracking server object and then returns.

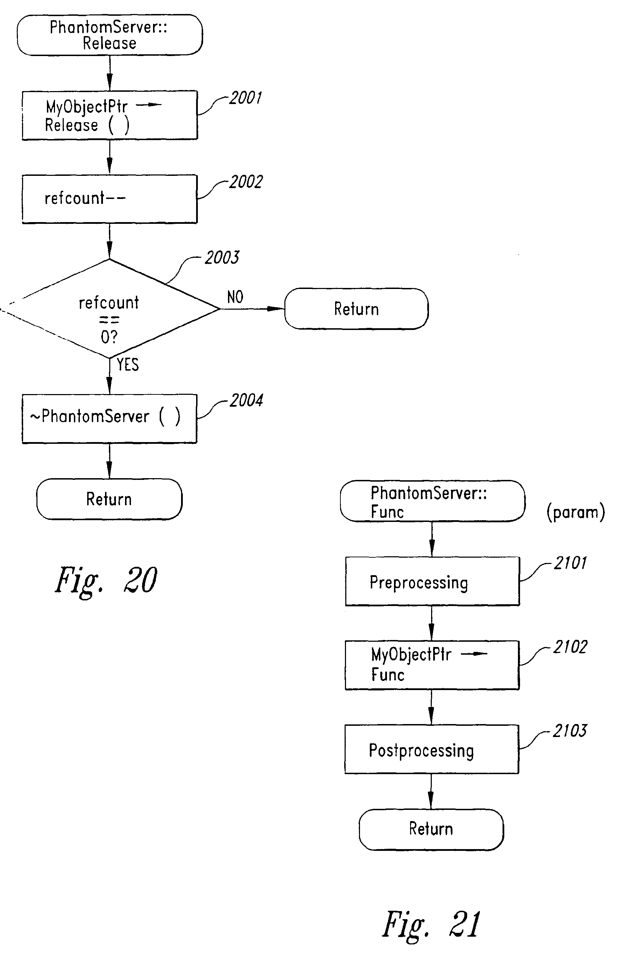

Figure 20 is a flow diagram of the release function of the phantom server class. In step 2001, the function forwards its invocation to the client tracking server object. In step 2002, the function decrements the reference count of the phantom server object. In step 2003, if the reference count is equal to 0, then the function continues at step 2004, else the function returns. In step 2004, the function invokes the destructor of the phantom server object and then returns.

Figure 21 is a flow diagram of an example implementation of a function of the phantom server class that is inherited from the interface of the server class. In step 2101, the function performs custom preprocessing. In step 2102, the function forwards to the corresponding function of the client tracking server object. In step 2103, the function performs custom post processing. The function then returns.

Based on the above description, it will be appreciated that, although specific embodiments of the invention have been described herein for purposes of illustration, various modificafions may be made. For example, the term "client" encompasses any type of software component such as module, process, or thread, and is not limited to an object in the object-oriented sense. In addition, the phantom manager may not be at separate object. Rather, its behavior can be integrated into the implementation of the query function of the client tracking server class. The integration may be appropriate when it is not desired to perform custom processing when a phantom server object is created or destroyed. Also, a server class can be defined initially or modified to include the behavior of the phantom manager class so that objects can be tracked. Also, a phantom server object can also have a phantom-phantom server object associated with it to track various sub-clients of a client. For example, a derivation of the phantom server class could implement client tracking on the phantom server object itself. The principles of the present invention may be used in environments where a server can be dynamically cast. Microsoft's COM is such an environment and the query interface function of the IUnknown interface provides dynamic casting. Accordingly, the invention is not limited except as by the appended claims.

## Claims

1. A method for tracking client access to a server object (403) on a client-by-client basis without server class modification, comprising:
providing a client tracking server class, derived from the server class, wherein the client tracking server class includes an implementation of a query interface function that overrides the query interface function of the server class;
instantiating a client tracking server object;
invoking the query interface function of the client tracking server object; and
in response to said invoking, instantiating (1301) a phantom server object that provides an implementation of an interface that is the same interface as the interface that is provided by the server class. '

2. The method according to claim 1, further comprising, as a result of said invoking, retrieving a pointer to the phantom server object.

3. The method according to claim 1, wherein when a client invokes a function of the phantom server object, the function can perform custom processing and forward the invocation of the function to the corresponding function of the client tracking server object.

4. The method according to claim 1, wherein the custom processing includes identifying whether a certain client invokes a certain function of the server class.

5. The method according to claim 4, wherein the custom processing includes tracking whether a certain client invokes a first function and then performing an alternate behavior when the same client invokes a second function.

6. A computer readable medium comprising computer-executable instructions for performing all the steps of the method according to any one of the claims 1 to 5, when run on a computer.

7. A client tracking system, including:
a client tracking server object (401), wherein the class of the client tracking server object is derived from a server class of the client tracking system, wherein a query interface function of the client tracking server class overrides a query interface function of the server class;
at least one phantom server object (403), wherein a phantom server object is instantiated when the query interface function of the client tracking server class is invoked, wherein the class of the at least one phantom server object is inherited from the server class of the client tracking system; and
at least one client object, wherein when a client object invokes a function of a phantom server object of said at least one phantom server object, the function is custom processed by the phantom server object before forwarding the invocation of the function to the client tracking server object.

8. The client tracking system according to claim 7, wherein the custom processing of the function includes identifying whether a particular client invokes a particular function of the server class.

9. The client tracking system according to claim 8, wherein the custom processing of the function includes tracking whether a particular client invokes a first function and then performing an alternate behavior when the same client invokes a second function.

10. The client tracking system according to claim 7, wherein when the query interface function of the client tracking server class is invoked, thereby instantiating a phantom server object, the query interface function returns a reference to the phantom server object.

11. The client tracking system according to claim 10, wherein the reference to the phantom server object is a pointer.

12. The client tracking system according to claim 7, further including a phantom manager object, wherein the class of the phantom manager object includes a function for instantiating a phantom server object, a function for tracking phantom server objects and a function for returning references to phantom server objects.

13. The client tracking system according to claim 12, wherein the phantom manager object further includes an instance going away function that is invoked when a phantom server object is destructed.

14. The client tracking system according to claim 13, wherein the custom processing is performed by the phantom manager object when a client object releases a reference to a phantom server object that causes a reference count of phantom server objects to go to zero.

15. The client tracking system according to claim 12, wherein the phantom manager object is a data member of the client tracking server class.

16. The client tracking system according to claim 7, wherein the phantom manager class has a base implementation of its functions and provides an overriding implementation of a create instance function and an instance going away function, wherein the create instance function creates a phantom server object that inherits the interface of the server class and the instance going away function is invoked to perform custom processing when a client object has released all of its pointers to the phantom server object.

17. The client tracking system according to claim 7, wherein the data members of the at least one phantom server object include a my object pointer data member that is a pointer to a corresponding client tracking server object and a my manager pointer data member that is a pointer to a corresponding phantom manager object.

## Patentansprüche

1. Verfahren zum Verfolgen von Clientzugriff auf ein Serverobjekt (403) für jeden einzelnen Client, ohne Serverklasse-Modifizierung, umfassend:
Bereitstellen einer Clientverfolgungs-Serverklasse, abgeleitet von der Serverklasse, wobei die Clientverfolgungs-Serverklasse eine Implementierung einer Abfrage-Interfacefunktion enthält, die der Abfrage-Interfacefunktion der Serverklasse übergeordnet ist,
Instanziieren eines Clientvertolgungs-Serverobjekts,
Aufrufen der Abfrage-Interfacefunktion des Clientverfolgungs-Serverobjekts und,
in Reaktion auf das Aufrufen, Instanziieren (1301) eines Phantom-Serverobjekts, das eine Implementierung eines Interfacees bereitstellt, das dasselbe Interface ist, wie das Interface, das durch die Serverklasse bereitgestellt wird.

2. Verfahren nach Anspruch 1, das des Weiteren als Ergebnis des Aufrufens das Abrufen eines Zeigers auf das Phantom-Serverobjekt umfasst.

3. Verfahren nach Anspruch 1, wobei, wenn ein Client eine Funktion des Phantom-Serverobjekts aufruft, die Funktion spezifische Verarbeitung durchführen kann und den Aufruf der Funktion zu der entsprechenden Funktion des Clientverfolgungs-Serverobjekts weiterleiten kann.

4. Verfahren nach Anspruch 1, wobei die spezifische Verarbeitung ein Feststellen einschließt, ob ein bestimmter Client eine bestimmte Funktion der Serverklasse aufruft.

5. Verfahren nach Anspruch 4, wobei die spezifische Verarbeitung ein Verfolgen, ob ein bestimmter Client eine erste Funktion aufruft, und danach das Ausüben eines anderen Verhaltens, wenn derselbe Client eine zweite Funktion aufruft, einschließt.

6. Computertesbares Medium, das computerausführbare Befehle zum Ausführen aller der Schritte des Verfahrens nach einem der Ansprüche 1 bis 5 umfasst, wenn es auf einem Computer betrieben wird.

7. Clientvertolgungssystem, das enthält:
ein Clientvertolgungs-Serverobjekt (401), wobei die Klasse des Clientvertolgungs-Serverobjekts von einer Serverklasse des Clientverfolgungssystems abgeleitet ist, und wobei eine Abfrage-Interfacefunktion der Clientvertolgungs-Serverklasse einer Abfrage-Interfacefunktion der Serverklasse übergeordnet ist,
wenigstens ein Phantom-Serverobjekt (403), wobei ein Phantom-Serverobjekt instanziiert wird, wenn die Abfrage-Interfacefunktion der Clientverfolgungs-Serverklasse aufgerufen wird, und wobei die Klasse des wenigstens einen Phantom-Serverobjekts von der Serverklasse des Clientvertolgungssystems geerbt wird, und
wenigstens ein Clientobjekt, wobei, wenn ein Clientobjekt eine Funktion eines Phantom-Serverobjekts von dem wenigstens einen Phantom-Serverobjekt aufruft, die Funktion durch das Phantom-Serverobjekt spezifisch verarbeitet wird, bevor der Aufruf der Funktion zu dem Clientvertolgungs-Serverobjekt weitergeleitet wird.

8. Clientverfolgungssystem nach Anspruch 7, wobei die spezifische Verarbeitung der Funktion Feststellen, ob ein bestimmter Client eine bestimmte Funktion der Serverklasse aufruft, einschließt.

9. Clientverfolgungssystem nach Anspruch 8, wobei die spezifische Verarbeitung der Funktion Verfolgen, ob ein bestimmter Client eine erste Funktion aufruft und anschließend das Ausüben eines anderen Verhaltens, wenn derselbe Client eine zweite Funktion aufruft, einschließt.

10. Clientverfolgungssystem nach Anspruch 7, wobei, wenn die Abfrage-Interfacefunktion der Clientverfolgungs-Serverklasse aufgerufen wird und **dadurch** ein Phantom-Serverobjekt instanziiert, die Abruf-Interfacefunktion eine Referenz auf das Phantom-Serverobjekt zurücksendet.

11. Clientverfolgungssystem nach Anspruch 10, wobei die Referenz auf das Phantom-Serverobjekt ein Zeiger ist.

12. Clientverfolgungssystem nach Anspruch 7, das des Weiteren ein Phantom-Managerobjekt enthält, wobei die Klasse des Phantom-Managerobjekts eine Funktion zum Instanziieren eines Phantom-Serverobjekts, eine Funktion zur Verfolgung des Phantom-Serverobjekts und eine Funktion zum Zurücksenden von Referenzen auf Phantom-Serverobjekte enthält.

13. Clientverfolgungssystem nach Anspruch 12, wobei das Phantom-Managerobjekt des Weiteren eine Instanz-Going-away-Funktion enthält, die aufgerufen wird, wenn ein Phantom-Serverobjekt zerstört ist.

14. Clientverfolgungssystem nach Anspruch 13, wobei die spezifische Verarbeitung durch das Phantom-Managerobjekt durchgeführt wird, wenn ein Clientobjekt eine Referenz auf ein Phantom-Serverobjekt ausgibt, die verursacht, dass eine Referenzzählung von Phantom-Serverobjekten auf null geht.

15. Clientverfolgungssystem nach Anspruch 12, wobei das Phantom-Managerobjekt ein Datenelement der Clientverfolgungs-Serverklasse ist.

16. Clientvertolgungssystem nach Anspruch 7, wobei die Phantom-Managerklasse eine Basisimplementierung ihrer Funktionen hat und eine übergeordnete Implementierung einer Instanz-Erzeugungsfunktion und einer Instanz-Going-away-Funktion bereitstellt, wobei die Instanz-Erzeugungsfunktion ein Phantom-Serverobjekt erzeugt, das das Interface der Serverklasse erbt, und die Instanz-Going-away-Funktion aufgerufen wird, um eine spezifische Verarbeitung durchzuführen, wenn ein Clientobjekt alle seine Zeiger auf das Phantom-Serverobjekt freigegeben hat.

17. Clientverfolgungssystem nach Anspruch 7, wobei die Datenelemente des wenigstens einen Phantom-Serverobjekts ein Mein-Objekt-Zeigerdatenelement, das ein Zeiger auf ein entsprechendes Clientverfolgungs-Serverobjekt ist, und ein Mein-Manager-Zeigerdatenelement, das ein Zeiger auf ein entsprechendes Phantom-Managerobjekt ist, enthalten.

## Revendications

1. Procédé pour effectuer le suivi d'un accès client à un objet serveur (403), client par client, sans changement de classe de serveur, comprenant les étapes qui consistent à:
prévoir une classe de serveur de suivi de client, dérivée de la classe de serveur, la classe de serveur de suivi de client comprenant une mise en oeuvre d'une fonction d'interface d'interrogation qui est prioritaire sur la fonction d'interface d'interrogation de la classe de serveur;
instancier un objet serveur de suivi de client;
faire appel à la fonction d'interface d'interrogation de l'objet serveur de suivi de client; et
en réponse audit appel, instancier (1301) un objet serveur fantôme qui assure une mise en oeuvre d'une interface identique à l'interface fournie par la classe de serveur.

2. Procédé selon la revendication 1, comprenant également, par suite dudit appel, la récupération d'un pointeur pointé sur l'objet serveur fantôme.

3. Procédé selon la revendication 1, dans lequel, lorsqu'un client fait appel à une fonction de l'objet serveur fantôme, la fonction peut exécuter un traitement personnalisé et transmettre l'appel à la fonction à une fonction correspondante de l'objet serveur de suivi de client.

4. Procédé selon la revendication 1, dans lequel le traitement personnalisé comprend le fait de déterminer si un client donné fait ou non appel à une fonction donnée de la classe de serveur.

5. Procédé selon la revendication 4, dans lequel le traitement personnalisé comprend le fait de rechercher si un client donné fait ou non appel à une première fonction, puis l'adoption d'un comportement alternatif lorsque le même client fait appel à une seconde fonction.

6. Support lisible par ordinateur comprenant des instructions exécutables par ordinateur pour, lorsqu'elles sont exécutées sur un ordinateur, réaliser toutes les étapes du procédé selon l'une quelconque des revendications 1 à 5.

7. Système de suivi de client, comprenant:
un objet serveur de suivi de client (401), la classe de l'objet serveur de suivi de client étant dérivée d'une classe de serveur du système de suivi de client, et une fonction d'interface d'interrogation de la classe de serveur de suivi de client étant prioritaire sur une fonction d'interface d'interrogation de la classe de serveur;
au moins un objet serveur fantôme (403), un objet serveur fantôme étant instancié lorsque la fonction d'interface d'interrogation de la classe de serveur de suivi de client est appelée, et la classe du ou des objets serveurs fantômes étant héritée de la classe de serveur du système de suivi de client; et
au moins un objet client, dans lequel, lorsqu'un objet client fait appel à une fonction d'un objet serveur fantôme dudit ou desdits objets serveurs fantômes, la fonction est traitée de manière personnalisée par l'objet serveur fantôme avant la transmission de l'appel à la fonction à l'objet serveur de suivi de client.

8. Système de suivi de client selon la revendication 7, dans lequel le traitement personnalisé de la fonction comprend le fait de déterminer si un client particulier fait ou non appel à une fonction particulière de la classe de serveur.

9. Système de suivi de client selon la revendication 8, dans lequel le traitement personnalisé de la fonction comprend le fait de rechercher si un client particulier fait ou non appel à une première fonction, puis l'adoption d'un comportement alternatif lorsque le même client fait appel à une seconde fonction.

10. Système de suivi de client selon la revendication 7, dans lequel, lorsque la fonction d'interface d'interrogation de la classe de serveur de suivi de client est appelée, pour ainsi instancier un objet serveur fantôme, la fonction d'interface d'interrogation renvoie une référence à l'objet serveur fantôme.

11. Système de suivi de client selon la revendication 10, dans lequel la référence à l'objet serveur fantôme est un pointeur.

12. Système de suivi de client selon la revendication 7, comprenant également un objet gestionnaire fantôme, la classe de l'objet gestionnaire fantôme comprenant une fonction destinée à instancier un objet serveur fantôme, une fonction destinée à rechercher des objets serveurs fantômes et une fonction destinée à renvoyer des références à des objets serveurs fantômes.

13. Système de suivi de client selon la revendication 12, dans lequel l'objet gestionnaire fantôme comprend également une fonction de disparition d'instance qui est appelée lorsqu'un objet serveur fantôme est détruit.

14. Système de suivi de client selon la revendication 13, dans lequel le traitement personnalisé est exécuté par l'objet gestionnaire fantôme lorsqu'un objet client libère une référence à un objet serveur fantôme qui fait passer à zéro un comptage de références d'objets serveurs fantômes.

15. Système de suivi de client selon la revendication 12, dans lequel l'objet gestionnaire fantôme est un organe de données de la classe de serveur de suivi de client.

16. Système de suivi de client selon la revendication 7, dans lequel la classe de gestionnaire fantôme comporte une mise en oeuvre de base de ses fonctions et permet une mise en oeuvre prioritaire d'une fonction de création d'instance et d'une fonction de disparition d'instance, la fonction de création d'instance créant un objet serveur fantôme qui hérite l'interface de la classe de serveur et la fonction de disparition d'instance étant appelée pour exécuter un traitement personnalisé lorsqu'un objet client a libéré la totalité de ses pointeurs pointés sur l'objet serveur fantôme.

17. Système de suivi de client selon la revendication 7, dans lequel les organes de données du ou des objets serveurs fantômes comprennent un organe de données de pointeur d'objet personnel qui est un pointeur pointé sur un objet serveur de suivi de client correspondant, et un organe de données de pointeur de gestionnaire personnel qui est un pointeur pointé sur un objet gestionnaire fantôme correspondant.
